# EUROPÄISCHE PATENTSCHRIFT

(11) **EP 1 021 293 B1**
(45) Veröffentlichungstag und Bekanntmachung des Hinweises auf die Patenterteilung: **08.01.2003**
(21) Anmeldenummer: 98954362.4
(22) Anmeldetag: 06.10.1998
(51) Int. Cl.: B31B 1/74, G01B 11/06, G01B 11/04

(54) **VERFAHREN UND VORRICHTUNG ZUM PRÜFEN EINER BREITE EINER MATERIALBAHN**
METHOD AND DEVICE FOR CHECKING THE WIDTH OF A MATERIAL WEB
PROCEDE ET DISPOSITIF POUR CONTROLER LA LARGEUR D'UN MATERIAU EN BANDE

(30) Priorität: 06.10.1997 DE 19743984
(43) Veröffentlichungstag der Anmeldung: 26.07.2000
(73) Patentinhaber: Focke & Co. (GmbH & Co.), 27283 Verden (DE)
(72) Erfinder: FOCKE, Heinz, D-27283 Verden (DE); GOSEBRUCH, Harald, D-27283 Verden (DE)
(74) Vertreter: Bolte, Erich, Dipl.-Ing.
(86) Internationale Anmeldenummer: EP9806363
(87) Internationale Veröffentlichungsnummer: WO99017921

(56) Entgegenhaltungen:
- GB-A- 2 282 800
- US-A- 4 277 176
- US-A- 4 773 760
- US-A- 5 581 353

## Beschreibung

Die Erfindung betrifft ein Verfahren zum Prüfen einer Breite einer Materialbahn, wobei bei Abweichung der Breite von einem vorgegebenen Sollmaß ein Fehlersignal erzeugt wird, um die Materialbahn aus einem Fertigungsprozess herauszunehmen. Weiterhin betrifft die Erfindung eine Vorrichtung zur Durchführung des Verfahrens.

In der Verpackungstechnik werden üblicherweise im Bereich von Verpackungsmaschinen Zuschnitte des Verpackungsmaterials von fortlaufenden Materialbahnen abgetrennt und sodann dem Verpackungsprozess zugeführt. Für viele Anwendungsbereiche müssen die Zuschnitte ein exaktes, packungsgerechtes Format aufweisen, um Störungen beim Herstellungsprozess der Packungen bzw. Ungenauigkeiten der Packungen selbst zu vermeiden. Dies gilt insbesondere bei der Herstellung von Zuschnitten für Kragen, die als Bestandteil von Klappschachteln (Hinge-Lid-Packungen) eingesetzt werden.

Die Messung von Materialbahnen ist grundsätzlich bekannt, auch in Verbindung mit der Verpackungstechnik. So ist bereits vorgeschlagen worden, die Dicke einer Materialbahn mit Hilfe von Lichtstrahlen zu ermitteln, die zu beiden Seiten der Materialbahn wirksam werden (US 4 773 760). Dieses Messverfahren ist nicht bestimmt und auch nicht geeignet für die Messung der exakten Breite einer Materialbahn.

Bei einem anderen bekannten Messverfahren geht es ebenfalls nur um die Messung der Dicke einer Materialbahn bzw. eines Materialstücks, konkret um die Messung von Wellpappe. Hierfür wird das Triangulationsmessverfahren mit Hilfe von Laserstrahlen als Messmittel angewendet. Die Messung der Breite der Materialbahn ist auch hier nicht vorgesehen (US 5 581 353).

Bekannt ist weiterhin ein Messverfahren für einzelne blattförmige oder tafelförmige Gegenstände hinsichtlich der exakten Positionierung einer Bedruckung (US 4 277 176). Es wird eine Breite gemessen, und zwar eines Randabstands eines Druckfeldes von einem freien Rand des Druckträgers. Es wird also auch hier weder die Breite des Druckträgers insgesamt oder gar eine fortlaufende Materialbahn hinsichtlich der korrekten Breite überprüft.

Der Erfindung liegt die Aufgabe zugrunde, Maßnahmen für die Fertigung von exakten Zuschnitten in der Verpackungstechnik vorzuschlagen, insbesondere für die Herstellung von sogenannten Kragen als Bestandteil von Zigarettenpackungen des Typs Klappschachtel.

Zur Lösung dieser Aufgabe ist das erfindungsgemäße Verfahren dadurch gekennzeichnet, dass die Breite einer aus Verpackungsmaterial bestehenden, fortlaufenden Materialbahn selbst und zwar während des Fertigungsprozesses fortlaufend geprüft und eine fehlerfreie Materialbahn einem Schneidaggregat zum Abtrennen von Zuschnitten von der Materialbahn, insbesondere zum Herstellen von Kragen für Klappschachteln, zugeführt wird.

Für die leistungsfähige Produktion von komplexen Packungen, insbesondere Klappschachteln, ist die präzise Ausgestaltung der Zuschnitte, insbesondere des Kragenzuschnitts, außerordentlich wichtig. In diesem Zusammenhang ist gemäß einem weiteren Merkmal des erfindungsgemäßen Verfahrens vorgesehen, dass auch die Dicke der Materialbahn geprüft und bei der Entscheidung über den Einsatz des Materials für die Herstellung der Zuschnitte herangezogen wird.

Die Erfindung bezieht sich weiterhin auf eine Vorrichtung zur Durchführung des Verfahrens, und zwar mit einer Prüfeinheit zur Prüfung der Breite der Materialbahn und zur Erzeugung eines Fehlersignals bei Abweichungen von einem vorgegebenen Sollmaß. Die Vorrichtung ist dadurch gekennzeichnet, dass die Prüfeinheit derart ausgebildet ist, um die Breite einer aus Verpackungsmaterial bestehenden, fortlaufenden Materialbahn selbst und zwar während des Fertigungsprozesses fortlaufend zu prüfen und die Prüfeinheit einem Schneidaggregat zum Abtrennen von Zuschnitten von der Materialbahn, insbesondere zum Herstellen von Kragen für Klappschachteln, vorgeordnet ist.

Der Erfindung liegt die Erkenntnis zugrunde, daß die zu einer Bobine gewickelten Materialbahnen aus herstellungstechnischen Gründen häufig nicht der exakten, vorgegebenen Breite und/oder Dicke der herzustellenden Zuschnitte entsprechen. Insbesondere bei der Herstellung von Klappschachteln mit einem aus einem gesonderten Zuschnitt gefertigten Kragen ist eine exakte Breite der Materialbahn erforderlich, um Störungen bei den nachfolgenden Arbeitsschritten zur Herstellung der kompletten Klappschachtel zu vermeiden. Die Erfindung sieht deshalb vor, daß die Materialbahn im Bereich der Verpackungsmaschine, nämlich vor dem Abtrennen der Zuschnitte, hinsichtlich der exakten Breite und/oder Dicke fortlaufend oder stichprobenartig überprüft und bei Abweichungen von einem vorgegebenen Sollmaß ein Fehlersignal erzeugt wird, damit ggf. die Materialbahn aus dem Fertigungsprozeß herausgenommen wird.

Die Prüfung der Materialbahn hinsichtlich der korrekten Breite wird erfindungsgemäß durch optoelektronische Prüforgane vorgenommen, die in der Prüfeinheit angeordnet sind. Diese ist mit einer zentralen Auswerteeinheit für die Steuerung der Verpakkungsmaschine verbunden.

Vorzugsweise arbeiten die optoelektronischen Prüforgane nach dem Reflexionsprinzip. Die Materialbahn wird im Bereich der Prüfeinheit vorzugsweise über die volle Breite beleuchtet. Das von der Materialbahn reflektierte Licht wird durch optoelektronische Sensoren aufgefangen und ausgewertet. Eine besonders einfache und zuverlässige Lösung besteht darin, daß für den Empfang der reflektierten Lichts ein Zeilen-CCD-Chip verwendet wird. Ein derartiger lichtempfindlicher Empfänger kann anhand des empfangenen, von der Materialbahn reflektierten Lichts exakt die Breite der Materialbahn als beleuchteter Streifen feststellen.

Besonders vorteilhaft ist eine erfindungsgemäße Vorrichtung, bei der die Materialbahn durch ein geschlossenes Gehäuse hindurchgeleitet wird, in dem Leuchtdioden oberhalb der Materialbahn zur Ausleuchtung derselben positioniert und das von der Materialbahn reflektierte Licht über eine Optik auf einen Zeilen-CCD-Chip gelenkt wird. Dieser ist mit einer Steuereinheit verbunden.

Bevorzugt weist die Vorrichtung weitere Prüforgane zum Messen der Dicke der Materialbahn auf. Insbesondere werden dabei zwei Prüforgane, je eines auf einer Seite der Materialbahn, innerhalb einer Prüfeinheit angeordnet. Mittels geeigneter Meßverfahren, beispielsweise mittels Triangulationsverfahren, insbesondere Laser-Triangulationsverfahren, kann dann der Abstand zwischen jedem Prüforgan zur Dickenmessung und der Materialbahn gemessen werden. Da auch der Abstand der beiden Prüforgane zueinander bekannt ist, kann dann durch Abziehen der gemessenen Abstände von dem bekannten Abstand der Prüforgane zueinander auf die Dicke der Materialbahn geschlossen werden.

Weitere Einzelheiten der Erfindung beziehen sich auf die Ausgestaltung und Anordnung der Prüfeinheit.

Ein Ausführungsbeispiel der Vorrichtung wird nachfolgend anhand der Patentzeichnungen näher erläutert. Es zeigt:
- Fig. 1: eine Vorrichtung zum Herstellen von (Kragen-)Zuschnitten in schematischer Seitenansicht,
- Fig. 2: eine Prüfeinheit für die Materialbahn im Querschnitt,
- Fig. 3: eine Vorrichtung analog zu Fig. 1 jedoch mit abgewandelter Prüfeinheit,
- Fig. 4: eine weitere Prüfeinheit für die Materialbahn im Längsschnitt mit Breiten- und Dickenmessung der Matertialbahn.

Bei den in den Zeichnungen dargestellten Ausführungsbeispielen geht es um die fortlaufende Fertigung von Zuschnitten 10 durch Abtrennen von einer Materialbahn 11. Diese besteht beispielsweise aus dünnem Karton. Die Zuschnitte 10 sind insbesondere Kragen, die üblicherweise in Verbindung mit Klappschachteln (Hinge-Lid-Packungen) für Zigaretten eingesetzt werden.

Die von einer Bobine (nicht gezeigt) abgezogene Materialbahn wird durch Zugwalzen 12, 13 transportiert und einem Schneidaggregat 14 zugeführt. Dieses besteht im vorliegenden Falle aus zwei Messerwalzen 15, 15a bekannter Ausführung zum Abtrennen der Zuschnitte 10 von der Materialbahn 11. Die Zuschnitte 10 werden nach Freigabe durch die Messerwalzen 15, 15a von Förderwalzen 16, 16a erfaßt und mit erhöhter Fördergeschwindigkeit abtransportiert. Die Zuschnitte 10 werden - ggf. nach weiterer Bearbeitung - in den Verpackungsprozeß einer Verpackungsmaschine eingefördert.

Die Materialbahn 11 wird vor dem Abtrennen der Zuschnitte 10 durch eine Prüfeinheit 17 hindurchgeleitet. Diese hat die Aufgabe, ständig oder von Zeit zu Zeit die Breite der Materialbahn 11 zu überprüfen und bei Abweichungen von einem vorgegebenen Sollmaß bzw. einer vorgegebenen Bandbreite ein Fehlersignal zu erzeugen. Die Prüfeinheit 17 ist in Transportrichtung vor dem Schneidaggregat 14 bzw. vor den Zugwalzen 12, 13 positioniert.

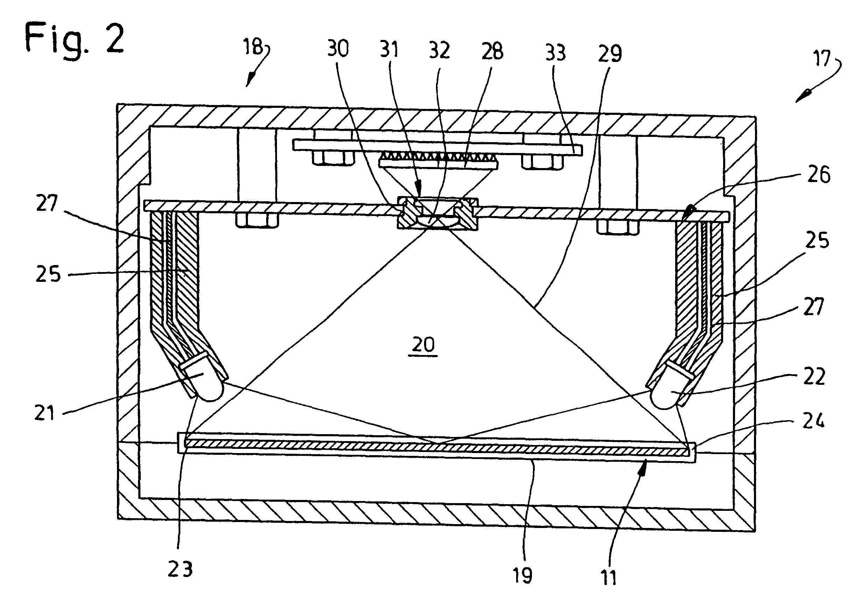

Die Prüfeinheit 17 besteht gemäß Fig. 2 aus einem überwiegend geschlossenen Gehäuse 18. Dieses ist mit einem schmalen, quergerichteten Schlitz 19 im Bereich von Seitenwänden 20 versehen. Über den Schlitz 19 tritt die Materialbahn 11 in das Gehäuse 18 ein und gegenüberliegend wieder aus. Innerhalb des Gehäuses 18 wird die Breite der Materialbahn 11 festgestellt und überwacht.

Die Breitenkontrolle der Materialbahn 11 erfolgt mit Hilfe optoelektronischer Organe. Bei dem vorliegenden Beispiel wird die eine (obere) Seite der Materialbahn 11 ausgeleuchtet durch innerhalb des Gehäuses 18 angeordnete Lichtquellen. Es handelt sich dabei im vorliegenden Falle um Leuchtdioden 21, 22, die oberhalb der Materialbahn 11 im Bereich von Längsrändern 23, 24 positioniert sind. Die Materialbahn wird im vorliegenden Falle über die volle Breite durch die beiden Leuchtdioden 21, 22 ausgeleuchtet. Die Leuchtdioden können beispielsweise Infrarotlicht aussenden.

Jede Leuchtdiode 21, 22 ist am (unteren) Ende einer Halterung 25 angebracht. Diese wiederum ist mit einer innerhalb des Gehäuses angeordneten Tragplatte 26 verbunden. Die Halterungen 25 sind als langgestreckter Hohlkörper ausgebildet, wobei innerhalb einer Längsbohrung eine zur Leuchtdiode 21, 22 führende Leitung 27 verläuft. Die Halterung 25 ist im unteren Bereich abgewinkelt, so daß die Leuchtdioden 21, 22 schräg zur Oberseite der Materialbahn 11 gerichtet sind.

Das von der Materialbahn 11 reflektierte Licht wird durch optoelektronische Sensoren ausgewertet. Im vorliegenden Fall ist innerhalb des Gehäuses 18 ein Zeilen-CCD-Chip 28 angeordnet. Dieser besteht aus einer Vielzahl von linienförmig nebeneinander angeordneten, lichtempfindlichen Sensoren. Die Messung der Breite der Materialbahn 11 erfolgt derart, daß durch das reflektierte Licht ein der Breite der Materialbahn 11 entsprechender Bereich bzw. Abschnitt des Zeilen-CCD-Chips beleuchtet ist. Die Anzahl der von dem Licht beaufschlagten Sensoren bildet eine exakte Steuergröße entsprechend der Breite der Materialbahn. Bei größeren oder kleineren Breiten wird eine größere oder kleinere Anzahl von Sensoren durch das reflektierte Licht erfaßt. Der Zeilen-CCD-Chip 28 ist mit einer Auswerte- und Steuereinheit verbunden.

Das von der Materialbahn 11 reflektierte Licht, hier dargestellt als Lichtkegel 29, wird über eine Blende 30 auf den Zeilen-CCD-Chip 28 gerichtet. Die Blende ist in der mit Abstand oberhalb der Materialbahn 11 positionierten Tragplatte 26 mittig zur Materialbahn 11 angeordnet. Des weiteren wird das Licht bzw. der Lichtkegel 29 durch eine Optik 31 mit mindestens einer Linse 32 hindurchgeleitet. Der Zeilen-CCD-Chip ist an einer mit dem Gehäuse 18 verbundenen Platine 33 angebracht.

Zeilen- bzw. Linien-Chips sind grundsätzlich bekannt. Sie bestehen aus einer Reihe lichtempfindlicher Punkte (Pixel). Die Chips reagieren entsprechend der Belegung der Pixel mit Licht. Je nach Ausführung können die Zeilen- bzw. Linien-Chips Genauigkeiten von 1/100 mm erfassen.

Im Falle einer hinsichtlich der Breite fehlerhaften Materialbahn 11 wird ggf. die Vorrichtung gestoppt, so daß die üblicherweise auf der gesamten Länge fehlerhafte Materialbahn 11 ausgewechselt werden kann.

Bei dem beschriebenen Ausführungsbeispiel reagiert die optoelektronische Prüfeinheit auf reflektiertes Licht. In analoger Weise kann die Vorrichtung auch so ausgebildet sein, daß lichtempfindliche Sensoren auf der zur Lichtquelle gegenüberliegenden Seite der Materialbahn 11 positioniert sind, im vorliegenden Falle also unterhalb der Materialbahn 11. Die Messung der Bahnbreite erfolgt in diesem Falle nach Maßgabe der Abdeckung der Sensoren, nämlich der Zeilen-CCD-Chips durch die Materialbahn gegenüber dem Licht.

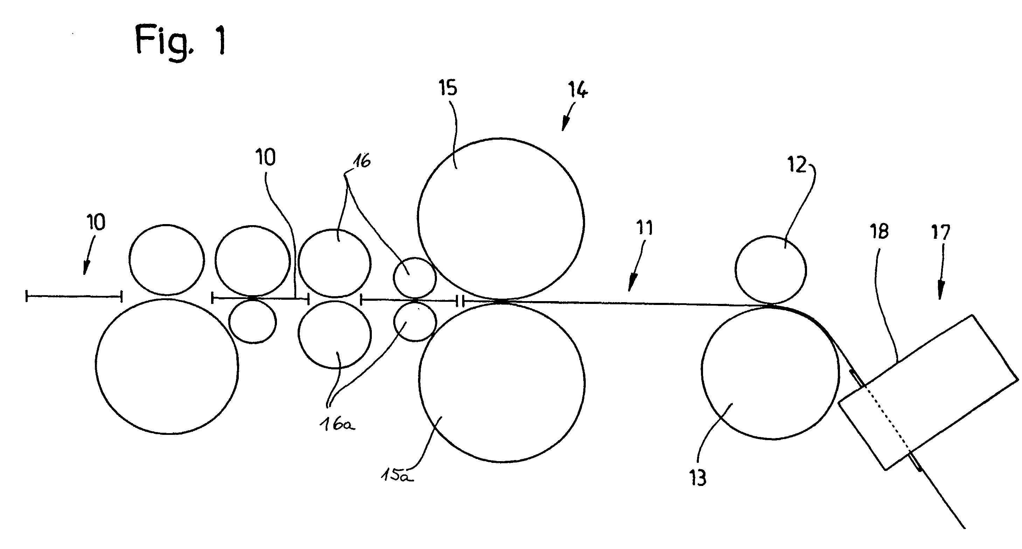

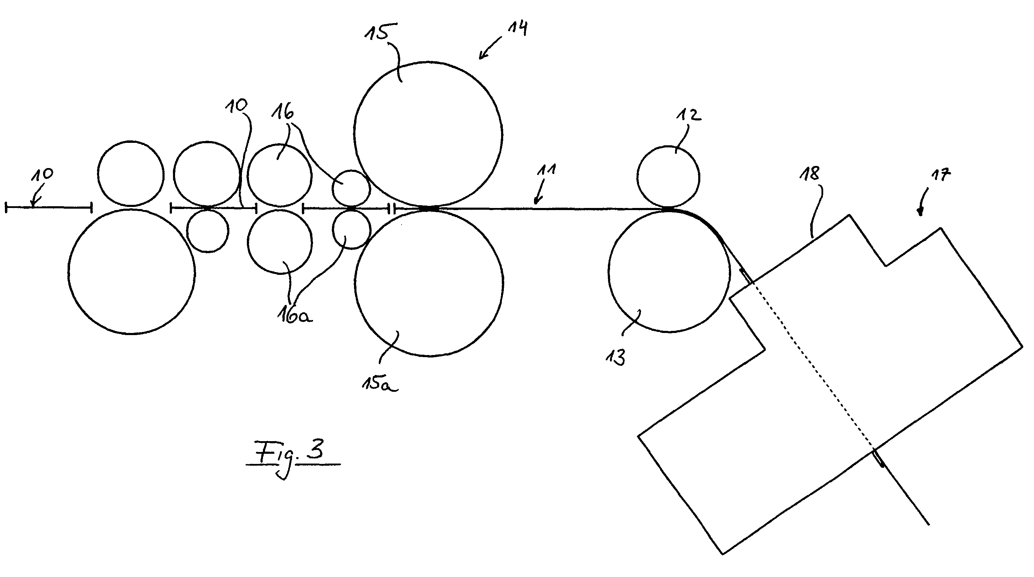

Fig. 3 zeigt eine Vorrichtung entsprechend Fig. 1 jedoch mit abgewandelter Prüfeinheit 17. Im übrigen entspricht die Vorrichtung aus Fig. 3 der Vorrichtung aus Fig. 1, so daß mit gleichen Bezugsziffern gleiche Teile bezeichnet sind.

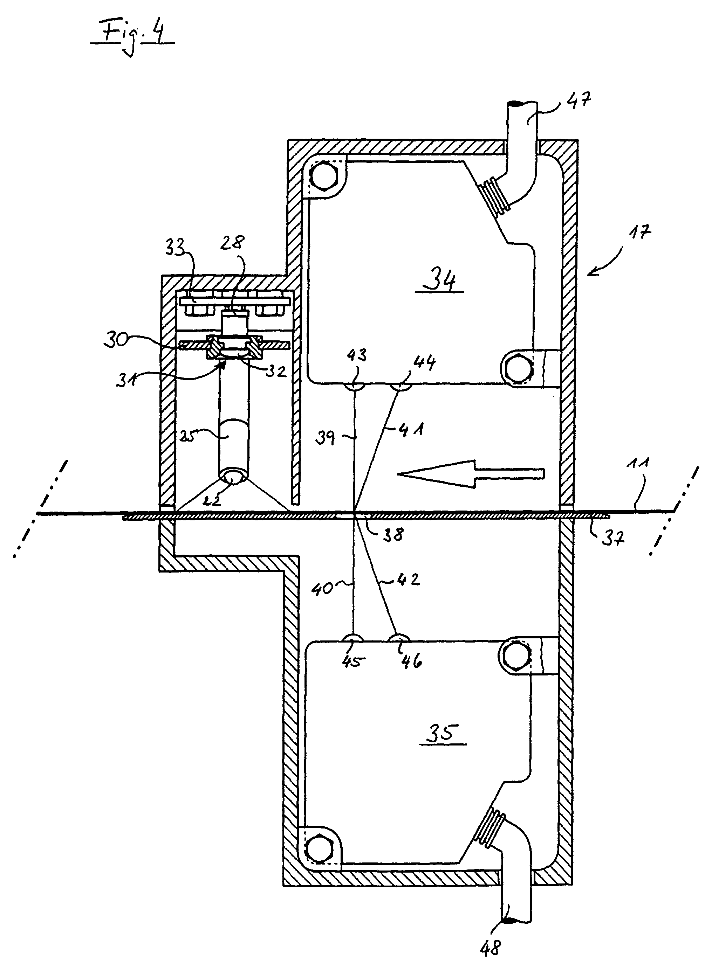

Fig. 4 zeigt im Längsschnitt die Prüfeinheit 17 aus Fig. 3. Diese Prüfeinheit 17 aus Fig. 3 ist gegenüber der Prüfeinheit 17 aus Fig. 2 derart variiert, daß neben dem Prüforgan zum Messen der Breite einer Materialbahn 11 zwei weitere Prüforgane 34, 35 zur Dickenmessung vorgesehen sind.

Im stromabwärts liegenden Teil der Prüfeinheit 17 befindet sich das Prüforgan zur Breitenmessung der Materialbahn. Insbesondere sind in Fig. 4 die Leuchtdiode 22, die Halterung 25, der Zeilen-CCD-Chip 28, die Blende 30, die Optik 31, die Linse 32 sowie die Platine 33 in einem durch eine Trennwand 36 abgetrennten Gehäuseteil untergebracht. Diese Elemente entsprechen den in Fig. 2 erläuterten Elementen und tragen daher ebenfalls gleiche Bezugsziffern.

Stromaufwärts, d. h. entgegen der Flußrichtung der Materialbahn 11 gesehen, befindet sich innerhalb des Gehäuses 18 jenseits der Trennwand 34 das erste Prüforgan 34 und das zweite Prüforgan 35 zur Dickenmessung der Materialbahn 11.

Innerhalb des Gehäuses 18 befindet sich eine Unterlage 37 zur Aufnahme bzw. zum Tragen und zum Führen der Materialbahn 11. Die Unterlage 37 führt die Materialbahn 11 sowohl im Bereich des Prüforgans zur Materialbahnbreitenmessung als auch im Bereich von erstem und zweitem Prüforgan 34, 35 zur Dickenmessung.

Im Bereich von erstem und zweitem Prüforgan 34, 35 zur Dickenmessung weist die Unterlage 37 eine Öffnung 38 auf.

Sowohl erstes als auch zweites Prüforgan 34, 35 zur Dickenmessung richten jeweils einen Laserstrahl 39, 40 in Richtung der Materialbahn 11. Die Öffnung 38 dient daher dem ungehinderten Durchdringen des Laserstrahls zur Materialbahn 11 auf beiden Seiten der Materialbahn 11, so daß beide Prüforgane 34, 35 zur Dickenmessung freie Sicht auf die Materialbahn 11 haben.

Sowohl der Laserstrahl 39 vom ersten Prüforgan 34 zur Dickenmessung als auch der Laserstrahl 40 vom zweiten Prüforgan 35 zur Dickenmessung werden von der Materialbahn reflektiert. Es bilden sich zwei reflektierte Laserstrahlen 41, 42, wobei der reflektierte Laserstrahl 41 der Reflektionsstrahl des Laserstrahls 39 und der reflektierte Laserstrahl 42 der Reflektionsstrahl des Laserstrahls 40 ist. Auf diese Weise werden sowohl der vom ersten Prüforgan 34 zur Dickenmessung ausgesandte Laserstrahl 39 als auch der vom zweiten Prüforgan 35 zur Dickenmessung ausgesandte Laserstrahl 40 jeweils zu den aussendenden Prüforganen 34, 35 reflektiert.

In Abhängigkeit des Abstandes der Materialbahn 11 zu den Prüforganen 34, 35 zur Dickenmessung erzeugen die Prüforgane unter Anwendung des Triangulationsverfahrens den jeweiligen Abständen entsprechende Signale.

Beim Triangulationsverfahren handelt es sich um ein Meßprinzip zum optischen Abstands- bzw. Längenmessen, wobei die Zuordnung von Meßsignal und Abstand über trigonometrische Winkelfunktionen verknüpft ist. Mittels des Triangulationsverfahrens kann eine Meßdistanz berührungslos mit Hilfe der Trigonometrie bestimmt werden. Der Lichtstrahl eines Lichtsenders, z. B. einer Laserdiode, z. B. einer GaAs-Laserdiode, wird über eine Linse fokussiert und beleuchtet einen Bildpunkt im zu messenden Abstand. Der Bildpunkt wird wiederum über eine Linse auf einem positionsempfindlichen Detektor innerhalb einer begrenzten Abbildungstiefe scharf abgebildet. Das Bestimmen des Abstands erfolgt dann unmittelbar aus der sich ergebenden geometrischen Anordnung.

Die zum Fokussieren notwendigen Linsen sind in Fig. 4 die beiden dem ersten Prüforgan 34 zur Dickenmessung zugeordneten Linsen 43, 44, sowie dem zweiten Prüforgan 35 zur Dickenmessung zugeordneten Linsen 45, 46.

Die von dem ersten Prüforgan 34 sowie dem zweiten Prüforgan 35 zur Dickenmessung erzeugten jeweiligen Abständen entsprechenden Signale werden über Leitungen 47, 48 einer zentralen Steuerung zugeordnet. Diese Steuerung erzeugt aus den Abstandssignalen ein Signal, das der Dicke der Materialbahn entspricht, bzw. unmittelbar einen Wert der Dicke der Materialbahn 11.

Der Steuerung ist der Abstand der beiden Prüforgane 34, 35 zueinander bekannt. Unter Berücksichtigung dieses Abstandes der beiden Prüforgane 34, 35 kann die Steuerung dann anhand der ermittelten Abstandswerte zu der Materialbahn 11 auf die Dicke der Materialbahn 11 schließen. Dabei werden vom Abstand der beiden Prüforgane 34, 35 zueinander die Werte der Abstände beider Prüforgan zu der Materialbahn abgezogen. Der resultierende Differenzwert entspricht genau der Dicke der Materialbahn 11.

Im Falle einer hinsichtlich der Dicke fehlerhafter Materialbahn 11 wird ggf. die Vorrichtung gestoppt, so daß die fehlerhafte Materialbahn 11 ausgewechselt werden kann. Sollte es sich nur um eine singuläre Schwankung der Dicke handeln, kann die aus diesem Materialbahnabschnitt gebildete Packung verfolgt und ausgeworfen oder eine andere Fehlerbehandlungsmaßnahme eingeleitet werden.

Alternativ zu der in Fig. 4 dargestellten Prüfanordnung mit zwei Prüforganen zur Dickenmessung kann man grundsätzlich auch mit einem einzelnen Prüforgan die Dicke der Materialbahn bestimmen. In diesem Fall wäre auch keine Öffnung 38 in der Unterlage 37 notwendig. Voraussetzung für eine derart vereinfachte Prüfeinrichtung ist jedoch, daß die Materialbahn 11 sehr exakt auf der Unterlage 37 aufliegt und dabei keinen Hohlraum zwischen der Materialbahn 11 und der Unterlage 37 bildet. Dann kann anhand des Abstands zwischen dem einen Prüforgan zur Dickenmessung zu der Materialbahn 11 auf die Dicke der Materialbahn 11 geschlossen werden. Dabei fließt in die Dickenermittlung der Abstand zwischen dem (einen) Prüforgan und der Unterlage 37 ein. Zieht man von diesem Abstand den gemessenen Abstand zwischen Prüforgan und Materialbahn 11 ab, so erhält man die Dicke der Materialbahn 11.

Das Laser-Triangulationsverfahren erlaubt eine Auflösung der Dickenmessung im Bereich von 0,01 µm. Der Laser-Lichtpunkt hat einen Durchmesser von etwa 8 - 16 µm, insbesondere 12 µm. Dadurch können selbst winzigste Meßobjekte bzw. ganz bestimmte Punkte der Materialbahn 11 erfaßt werden. Die Abtastfrequenz des Lasers liegt im Bereich von 40 - 60 kHz, insbesondere bei 50 kHz. Dadurch erreicht man eine sehr hohe Ortsauflösung der sich schnell bewegenden Materialbahn 11. Ferner erlaubt das Laser-Triangulationsverfahren einen Betriebsabstand der Prüforgane 34, 35 zur Materialbahn 11 von ca. 20 - 40 mm, insbesondere 30 mm. Dadurch müssen die Prüforgane 34, 35 nicht in unmittelbarer Nähe der Materialbahn 11 installiert werden. Dies ist insbesondere wegen der hohen Fördergeschwindigkeit der Materialbahn 11 vorteilhaft, die bei evtl. auftretenden Fehlern, z. B. Flattern oder Reißen der Materialbahn 11, bei zu dichter Anordnung der Prüforgane 34, 35 an der Förderstrecke der Materialbahn 11 zu einer Dejustierung bzw. Beschädigung der Prüforgane 34, 35 führen könnten.

Die Erfindung umfaßt sowohl die Prüfung der Breite der Materialbahn 11 alleine als auch die Prüfung der Breite mit der Dicke der Materialbahn 11 in Kombination . Insbesondere bei der Kombination von Breiten- und Dickenmessung der Materialbahn 11 erhält man sehr exakt gefertigte Zuschnitte.

### Bezugszeichenliste

- 10: Zuschnitt
- 11: Materialbahn
- 12: Zugwalze
- 13: Zugwalze
- 14: Schneidaggregat
- 15: Messerwalze
- 15a: Messerwalze
- 16: Förderwalze
- 16a: Förderwalze
- 17: Prüfeinheit
- 18: Gehäuse
- 19: Schlitz
- 20: Seitenwand
- 21: Leuchtdiode
- 22: Leuchtdiode
- 23: Längsrand
- 24: Längsrand
- 25: Halterung
- 26: Tragplatte
- 27: Leitung
- 28: Zeilen-CCD-Chip
- 29: Lichtkegel
- 30: Blende
- 31: Optik
- 32: Linse
- 33: Platine
- 34: erstes Prüforgan zur Dickenmessung
- 35: zweites Prüforgan zur Dickenmessung
- 36: Trennwand
- 37: Unterlage
- 38: Öffnung
- 39: Laserstrahl
- 40: Laserstrahl
- 41: reflektierter Laserstrahl
- 42: refelktierter Laserstrahl
- 43: Linse
- 44: Linse
- 45: Linse
- 46: Linse
- 47: Leitung
- 48: Leitung

## Patentansprüche

1. Verfahren zum Prüfen einer Breite einer Materialbahn (11), wobei bei Abweichung der Breite von einem vorgegebenen Sollmaß ein Fehlersignal erzeugt wird, um die Materialbahn (11) aus einem Fertigungsprozess herauszunehmen, **dadurch gekennzeichnet, dass** die Breite einer aus Verpackungsmaterial bestehenden, fortlaufenden Materialbahn (11) selbst und zwar während des Fertigungsprozesses fortlaufend geprüft und eine fehlerfreie Materialbahn einem Schneidaggregat (14) zum Abtrennen von Zuschnitten (10) von der Materialbahn (11), insbesondere zum Herstellen von Kragen für Klappschachteln, zugeführt wird.

2. Verfahren nach Anspruch 1, **dadurch gekennzeichnet, dass** auch die Dicke der Materialbahn (11) geprüft und bei Abweichung von einem vorgegebenen Sollmaß ein Fehlersignal erzeugt wird.

3. Vorrichtung zur Durchführung eines Verfahrens nach Anspruch 1 oder 2 mit einer Prüfeinheit (17) zur Prüfung einer Breite einer Materialbahn (11) mit der bei Abweichung der Breite von einem vorgegebenen Sollmaß ein Fehlersignal erzeugbar ist, um die Materialbahn (11) aus dem Fertigungsprozess herauszunehmen, **dadurch gekennzeichnet, dass** die Prüfeinheit (17) derart ausgebildet ist, um die Breite einer aus Verpakkungsmaterial bestehenden, fortlaufenden Materialbahn (11) selbst und zwar während des Fertigungsprozesses fortlaufend zu prüfen und die Prüfeinheit (17) einem Schneidaggregat (14) zum Abtrennen von Zuschnitten (10) von der Materialbahn (11), insbesondere zum Herstellen von Kragen für Klappschachteln, vorgeordnet ist.

4. Vorrichtung nach Anspruch 3, **dadurch gekennzeichnet, dass** die Prüfeinheit (17) auch zur Prüfung der Dicke der Materialbahn (11) ausgebildet ist.

5. Vorrichtung nach Anspruch 3 oder 4, **dadurch gekennzeichnet, dass** die Materialbahn (11) durch die Prüfeinheit (17) hindurchförderbar ist und dass die Breite und/oder Dicke der Materialbahn (11) durch optoelektronische Prüforgane messbar ist.

6. Vorrichtung nach einem der Ansprüche 3 bis 5, **dadurch gekennzeichnet, dass** die Prüfeinheit (17) ein allseits geschlossenes Gehäuse (18) aufweist mit Schlitzen (19) für den Einritt und Austritt der Materialbahn (11), wobei diese innerhalb des Gehäuses (18) beleuchtet ist und von der Materialbahn (11) reflektiertes Licht durch optoelektronische Sensoren empfangen wird nach Maßgabe der Breite der Materialbahn (11).

7. Vorrichtung nach Anspruch 3 oder einem der weiteren Ansprüche, **dadurch gekennzeichnet, dass** das von der Materialbahn (11) reflektierte Licht mindestens einem Zeilen- bzw. Linien-CCD-Chip zuführbar ist, welcher nach Maßgabe der Breite der Materialbahn von dem reflektierten Licht beleuchtet ist und dass der Chip (28) mit einer Auswerteeinheit verbunden ist.

8. Vorrichtung nach Anspruch 7 oder einem der weiteren Ansprüche, **dadurch gekennzeichnet, dass** dem Zeilen-CCD-Chip (28) oder einem anderen optoelektronischen Empfänger eine Blende (30) vorgeordnet ist zur Begrenzung des aufgrund von Reflexion auf den Chip (28) fallenden Lichts.

9. Vorrichtung nach Anspruch 7 oder einem der weiteren Ansprüche, **gekennzeichnet durch** eine den Chip (28) vorgeordnete Optik (31) mit mindestens einer Linse (32), insbesondere im Bereich der Blende (30) zum Fokussieren des reflektierten Lichts.

10. Vorrichtung nach Anspruch 3 oder einem der weiteren Ansprüche, **dadurch gekennzeichnet, dass** die Materialbahn (11) durch vorzugsweise zwei seitlich positionierte Leuchtdioden (21, 22) beleuchtbar ist, insbesondere mit Infrarotlicht.

11. Vorrichtung nach Anspruch 4, **dadurch gekennzeichnet, dass** mittels der Prüfeinheit (17) auch die Dicke der Materialbahn (11) durch Messen eines ersten Abstandes zwischen einem ersten Prüforgan (34) zur Dickenmessung und einer Oberfläche der Materialbahn (11) sowie durch Messen eines zweiten Abstandes zwischen einem zweiten Prüforgan (35) zur Dickenmessung und der gegenüberliegenden Oberfläche der Materialbahn (11) messbar ist.

12. Vorrichtung nach Anspruch 11, **dadurch gekennzeichnet, dass** zwischen erstem und zweiten Prüforgan (34, 35) zur Dickenmessung die Materialbahn (11) hindurchförderbar ist, und diese beiden Prüforgane (34, 35) in einem vorbestimmten Abstand zueinander angeordnet sind.

13. Vorrichtung nach einem der Ansprüche 3 bis 12, **gekennzeichnet durch** eine Unterlage (37) zur Tragen der Materialbahn (11) und, insbesondere nur, einem Prüforgan zur Dickenmessung, das in einem vorbestimmten Abstand zur Unterlage (37) angeordnet ist, derart, dass der Abstand zwischen der der Unterlage (37) abgewandten Oberfläche der Materialbahn (11) und diesem Prüforgan messbar ist.

14. Vorrichtung nach einem der Ansprüche 11 bis 13, **dadurch gekennzeichnet, dass** der bzw. die Abstände mittels Triangulationsverfahren, insbesondere Laser-Triangulationsverfahren, messbar ist bzw. sind.

## Claims

1. Process for checking a width of a material web (11), it being the case that, if the width differs from a predetermined desired dimension, an error signal is produced in order for the material web (11) to be removed from a production process, **characterized in that** the width of a continuous material web (11), consisting of packaging material, itself is checked continuously, to be precise during the production process, and a nondefective material web is fed to a cutting subassembly (14) for severing blanks (10) from the material web (11), in particular for producing collars for hinge-lid boxes.

2. Process according to Claim 1, **characterized in that** the thickness of the material web (11) is also checked and, if it differs from a predetermined desired dimension, an error signal is produced.

3. Apparatus for carrying out a process according to Claim 1 or 2, having a checking unit (17) for checking a width of a material web (11), by means of which, if the width differs from a predetermined desired dimension, an error signal can be produced in order for the material web (11) to be removed from the production process, **characterized in that** the checking unit (17) is designed in order for the width of a continuous material web (11), consisting of packaging material, itself to be checked continuously, to be precise during the production process, and the checking unit (17) has arranged upstream of it a cutting subassembly (14) for severing blanks (10) from the material web (11), in particular for producing collars for hinge-lid boxes.

4. Apparatus according to Claim 3, **characterized in that** the checking unit (17) is also designed for checking the thickness of the material web (11).

5. Apparatus according to Claim 3 or 4, **characterized in that** the material web (11) can be conveyed through the checking unit (17), and **in that** the width and/or the thickness of the material web (11) can be measured by optoelectronic checking elements.

6. Apparatus according to one of Claims 3 to 5, **characterized in that** the checking unit (17) has a housing (18) which is closed on all sides and has slits (19) for the entry and exit of the material web (11), the latter being illuminated within the housing (18) and light reflected from the material web (11) being received by optoelectronics sensors in accordance with the width of the material web (11).

7. Apparatus according to Claim 3 or one of the further claims, **characterized in that** the light reflected from the material web (11) can be fed to at least one linear array CCD chip which is illuminated by the reflected light in accordance with the width of the material web, and **in that** the chip (28) is connected to an evaluation unit.

8. Apparatus according to Claim 7 or one of the further claims, **characterized in that** the linear array CCD chip (28) or some other optoelectronic receiver has arranged upstream of it an aperture (30) for restricting the amount of light falling on the tube (28) as a result of reflection.

9. Apparatus according to Claim 7 or one of the further claims, **characterized by** an optical system (31) which is arranged upstream of the chip (28) and has at least one lens (32), in particular in the region of the aperture (30) for focussing the reflected light.

10. Apparatus according to Claim 3 or one of the further claims, **characterized in that** the material web (11) can be illuminated by preferably two laterally positioned light-emitting diodes (21, 22), in particular with infrared light.

11. Apparatus according to Claim 4, **characterized in that** the checking unit (17) can also measure the thickness of the material web (11) by measuring a first distance between a first thickness-measuring checking element (34) and one surface of the material web (11) and by measuring a second distance between a second thickness-measuring checking element (35) and the opposite surface of the material web (11).

12. Apparatus according to Claim 11, **characterized in that** the material web (11) can be conveyed through between the first and second thickness-measuring checking elements (34, 35), and said two checking elements (34, 35) are spaced apart from one another by predetermined distance.

13. Apparatus according to one of Claims 3 to 12, **characterized by** a support (37) for bearing the material web (11) and, in particular just, one thickness-measuring checking element which is spaced apart from the support (37) by a predetermined distance, such that it is possible to measure the distance between said checking element and that surface of the material web (11) which is directed away from the support (37).

14. Apparatus according to one of Claims 11 to 13, **characterized in that** it is possible to measure the distance or distance by means of a triangulation method, in particular laser triangulation method.

## Revendications

1. Procédé de contrôle de la largeur d'une bande de matériau (11), dans lequel, en cas d'écart de la largeur d'une valeur prescrite, est produit un signal de défaut pour retirer la bande de matériau (11) d'un processus de fabrication, **caractérisé par le fait que** la largeur d'une bande continue de matériau d'emballage (11) est contrôlée de façon continue pendant le processus de fabrication et une bande de matériau sans défaut est conduite à un dispositif de coupe (14) pour le détachement de découpes (10) de la bande de matériau (11), en particulier pour la production de cols pour des boîtes à couvercle basculant.

2. Procédé selon la revendication 1, **caractérisé par le fait qu'**aussi l'épaisseur de la bande de matériau (11) est contrôlée, et en cas d'écart d'une valeur prescrite est produit un signal de défaut.

3. Dispositif pour la mise en oeuvre d'un procédé selon l'une des revendications 1 et 2, comportant un dispositif de contrôle (17) pour le contrôle de la largeur d'une bande de matériau (11) avec lequel, en cas d'écart de la largeur d'une valeur prescrite, est produit un signal de défaut pour retirer la bande de matériau (11) du processus de fabrication, **caractérisé par le fait que** le dispositif de contrôle (17) est conçu pour contrôler de façon continue la largeur d'une bande continue de matériau d'emballage (11) pendant le processus de fabrication, et le dispositif de contrôle (17) est placé avant un dispositif de coupe (14) pour le détachement de découpes (10) de la bande de matériau (11), en particulier pour la production de cols pour des boîtes à couvercle basculant.

4. Dispositif selon la revendication 3, **caractérisé par le fait que** le dispositif de contrôle (17) est aussi conçu pour le contrôle de l'épaisseur de la bande de matériau (11).

5. Dispositif selon l'une des revendications 3 et 4, **caractérisé par le fait que** la bande de matériau (11) traverse le dispositif de contrôle (17) et que la largeur et/ou l'épaisseur de la bande de matériau (11) est mesurée par des organes de contrôle optoélectroniques.

6. Dispositif selon l'une des revendications 3 à 5, **caractérisé par le fait que** le dispositif de contrôle (17) présente un boîtier (18) fermé de tous les côtés et pourvu de fentes (19) pour l'entrée et la sortie de la bande de matériau (11), celle-ci étant éclairée à l'intérieur du boîtier (18), et la lumière réfléchie par la bande de matériau (11) étant reçue par des capteurs optoélectroniques en proportion de la largeur de la bande de matériau (11).

7. Dispositif selon la revendication 3 ou une des autres revendications, **caractérisé par le fait que** la lumière réfléchie par la bande de matériau (11) est envoyée à au moins une puce CCD de ligne qui est éclairée par la lumière réfléchie en proportion de la largeur de la bande de matériau, et que la puce (28) est reliée à un dispositif d'exploitation.

8. Dispositif selon la revendication 7 ou une des autres revendications, **caractérisé par le fait qu'**avant la puce CCD de ligne (28) ou un autre récepteur optoélectronique est placé un diaphragme (30) pour la limitation de la lumière qui tombe sur la puce (28) en raison de réflexion.

9. Dispositif selon la revendication 7 ou une des autres revendications, **caractérisé par** un dispositif optique (31) placé avant la puce (28) et comportant au moins une lentille (32), en particulier dans la zone du diaphragme (30), pour la focalisation de la lumière réfléchie.

10. Dispositif selon la revendication 3 ou une des autres revendications, **caractérisé par le fait que** la bande de matériau (11) est éclairée par de préférence deux diodes lumineuses placées latéralement (21, 22), en particulier par de la lumière infrarouge.

11. Dispositif selon la revendication 4, **caractérisé par le fait qu'**au moyen du dispositif de contrôle (17) est aussi mesurée l'épaisseur de la bande de matériau (11) par mesure d'une première distance entre un premier organe de contrôle (34) pour la mesure de l'épaisseur et une face de la bande de matériau (11) ainsi que par mesure d'une deuxième distance entre un deuxième organe de contrôle (35) pour la mesure de l'épaisseur et la face opposée de la bande de matériau (11).

12. Dispositif selon la revendication 11, **caractérisé par le fait que** la bande de matériau (11) passe entre les premier et deuxième organes de contrôle (34, 35) pour la mesure de l'épaisseur, et ces deux organes de contrôle (34, 35) sont placés à une distance déterminée l'un de l'autre.

13. Dispositif selon l'une des revendications 3 à 12, **caractérisé par** un support (37) destiné à supporter la bande de matériau (11), et en particulier un seul organe de contrôle pour la mesure de l'épaisseur qui est placé à une distance déterminée du support (37), de façon telle que soit mesurée la distance entre la face de la bande de matériau (11) éloignée du support (37) et cet organe de contrôle.

14. Dispositif selon l'une des revendications 11 à 13, **caractérisé par le fait que** la distance est mesurée ou les distances sont mesurées par triangulation, en particulier par triangulation au laser.
